# EUROPEAN PATENT APPLICATION

(11) **EP 2 645 231 A2**
(43) Date of publication of application: **02.10.2013**
(21) Application number: 13161699.7
(22) Date of filing: 28.03.2013
(51) Int. Cl.: G06F 3/12

(54) **User terminal apparatus, method of controlling user terminal apparatus, image forming apparatus, and method of controlling image forming apparatus**

(30) Priority: 29.03.2012 IN CH12272012; 28.02.2013 KR 20130022351
(71) Applicant: Samsung Electronics Co., Ltd., Gyeonggi-do 443-742 (KR)
(72) Inventor: Sarin, Suseelan Bhargavi, PIN-680621 Karala (IN); Tharayil, Ranjith, PIN-680013 Kerala (IN)
(74) Representative: Brandon, Paul Laurence

(57) **Abstract**

A user terminal apparatus, a method of controlling a user terminal apparatus, an image forming apparatus, and a method of controlling an image forming apparatus are provided. The method of controlling the user terminal apparatus includes selecting an application positioned in an application server, displaying an interface for receiving a parameter related to an image forming job provided from the selected application, and generating job metadata about the image forming job. The job metadata includes information about the parameter received by the interface and the selected application, and transmitting the generated job metadata to the image forming apparatus.

## Description

### CROSS-REFERENCE TO RELATED APPLICATIONS

This application is related to, and claims priority, under 35 U.S.C. §119 to Indian Patent Application No. 1227/CHE/2012, filed on March 29, 2012, Indian Patent Office, and Korean Patent Application No. 10-2013-0022351, filed on February 28, 2013, in the Korean Intellectual Property Office, the disclosures of which are incorporated herein by reference in its entirety.

### BACKGROUND

### 1. Field

Embodiments of the present disclosure relate to a user terminal apparatus, a method of controlling a user terminal apparatus, an image forming apparatus, and a method of controlling an image forming apparatus, and more particularly, to providing a user terminal apparatus that executes a job in a network image forming apparatus by using a user terminal apparatus, a method of controlling a user terminal apparatus, an image forming apparatus, and a method of controlling an image forming apparatus.

### 2. Description of the Related Art

An image forming apparatus may be defined as an apparatus that prints data e.g., printing data generated by a terminal apparatus such as a computer on a recording paper. Examples of an image forming apparatus include a copier, a scanner, a fax machine, and a multifunction peripheral (MFP) that accomplishes multiple functions thereof through one apparatus, etc.

An image forming apparatus may be of a type that can be used independently or a type that may be connected to a network. The independent-type image forming apparatus may generally be connected to a computer using the image independent-type image forming apparatus and may be disposed close to the computer. The independent type of image forming apparatuses may be easily used due to their connectivity and proximities with respect to a host computer, but may not usually be shared with other computers. As Local Area Networks (WANs) and Local Area Networks (LANs) are developed, networking of image forming apparatuses for operating the image forming apparatuses with a set of computers are being distributed. These image forming apparatuses may be referred to as network image forming apparatuses.

Recently image forming apparatuses are capable of supporting various types of user interfaces and designs. Recent image forming apparatuses are capable of supporting a graphical user interface (GUI). The GUI assists a user in listing jobs of an image forming apparatus and selecting various printing options, a size of a paper on which a document is printed, etc. The GUI may be flexible so that the user has a better experience and enables easy-to-use operator interfaces. The GUI enhances management of the image forming apparatus.

Recently image forming apparatuses are capable of supporting component-based architectures. The component-based architectures allow third party applications to be downloaded and used in image forming apparatuses. For example, the applications include applications that are able to upload scanned images to Social Networking Services (SNSs)/other sites, applications that are capable to download albums from SNSs/other sites and print the albums, and applications that scan a set of documents, perform several processing (e.g., generate an optical character reader (OCR) and metadata for documents), and upload a document to a data management system (DMS).

A user may easily download such applications to an image forming apparatus having a GUI to use the applications. As a result, a large number of applications have been developed and distributed for GUI image forming apparatuses. However, non-GUI image forming apparatuses have not been greatly developed due to their architectures. It may be difficult to download and use applications described above in the non-GUI image forming apparatuses. It may be difficult to install applications in the non-GUI image forming apparatuses and remove the applications from the non-GUI image forming apparatuses. Concerns of application developers and users include being able to guarantee a use of applications in the non-GUI image forming apparatuses, and completely removing of the applications from a system, when desired.

Conventional image forming apparatuses have problems due to absences of GUIs. For example, third party application developers may not be motivated to consider developments of solutions for non-GUI models. As another example, final users may not use applications as described above in low-priced image forming apparatuses.

Due to these and other reasons, non-GUI image forming apparatuses are not up to date and provide only printing objects without performing important changes. Accordingly, a method of accessing an image forming apparatus through applications without need for complicated hardware and large expense is required. In addition, an image forming apparatus is desired to support complicated jobs and applications without any confusion.

### SUMMARY

Exemplary embodiments of the present invention may address at least the above problems and/or disadvantages and other disadvantages not described above. The exemplary embodiments are not required to overcome the disadvantages or problems described above.

An exemplary embodiment of the present invention provides a method of remotely controlling a non-graphical user interface (GUI) image forming apparatus through a user terminal apparatus to enable complicated jobs in a non-graphical user interface (GUI) image forming apparatus.

An exemplary embodiment provides a method of downloading and executing an application in a non-GUI image forming apparatus by a user.

An exemplary embodiment provides a user terminal apparatus which controls an image forming apparatus through an application server.

According to an aspect of an exemplary embodiment, a method of controlling a user terminal apparatus that controls an operation of an image forming apparatus includes selecting an application positioned in an application server, displaying an interface for receiving a parameter related to an image forming job provided from the selected application, generating job metadata about the image forming job, wherein the job metadata comprises information about the parameter received by the interface and the selected application, and transmitting the generated job metadata to the image forming apparatus.

The method may include browsing at least one of a plurality of applications compatible with an image forming apparatus connected to the user terminal apparatus, wherein the plurality of applications are positioned in the application server, wherein one of the browsed at least one applications is selected.

The parameter may include at least one of an image forming option related to the image forming job and information about an image forming apparatus which is to perform the image forming job.

The information about the application may include at least one of Uniform Resource Locator (URL) information in which an application is located in the application server and lifecycle information of the application.

The method may include displaying an interface for receiving authentication information for an authentication of the image forming apparatus with respect to the application server, wherein the job metadata further including the authentication information is generated.

According to an aspect of the exemplary embodiment, a method of controlling an image forming apparatus connected to a user terminal apparatus includes receiving job metadata including a parameter related to an image forming job and information about an application selected in the user terminal apparatus from the user terminal apparatus, fetching the application selected in the user terminal apparatus from an application server by using the information of the job metadata about the application, installing the fetched application; and performing the image forming job by using the installed application and the parameter related to the image forming job.

The information about the application may include at least one of URL information in which an application is positioned in the application server and lifecycle information of the application.

The job metadata may further include authentication information for an authentication of the image forming apparatus with respect to the application server, wherein the method further includes: before fetching the application, requesting the authentication from the application server by using the authentication information.

The method may include controlling whether the installed application is to be maintained or uninstalled, by using the lifecycle information of the application.

The image forming apparatus may be a non-graphical user interface (GUI) image forming apparatus.

According to an aspect of the exemplary embodiments, a user terminal apparatus that controls an operation of an image forming apparatus includes an input part which selects an application positioned in an application server, a display which displays an interface for receiving a parameter related to an image forming job provided by the selected application, a controller which generates job metadata about the image forming apparatus, wherein the job metadata comprises the parameter received by the interface and information about the selected application, and a communicator which transmits the generated job metadata to the image forming apparatus.

The display may browse and display at least one of a plurality of applications compatible with the image forming apparatus connected to the user terminal apparatus, wherein the plurality of applications are positioned in the application server. The input part may select one of the browsed at least one applications.

The parameter may include at least one of an image forming option related to the image forming job and information about an image forming apparatus which is to perform the image forming job.

The information about the application may include at least one of URL information in which an application is located in the application server and lifecycle information of the application.

The display may display an interface for receiving authentication information for an authentication of the image forming apparatus with respect to the application server. The controller may generate job metadata further comprising the authentication information.

According to an aspect of the exemplary embodiment, an image forming apparatus connected to a user terminal apparatus includes a communicator that receives job metadata comprising a parameter related to an image forming job and information about an application selected in the user terminal apparatus from the user terminal apparatus, a controller which fetches the application selected in the user terminal apparatus from an application server by using the information of the job metadata about the application and installs the fetched application, and an image former which performs the image forming job by using the installed application and the parameter related to the image forming job.

The information about the application may include at least one of URL information in which an application is located in the application server and lifecycle information of the application.

The job metadata may include authentication information for an authentication of the image forming apparatus with respect to the application server, wherein before fetching the application, the controller requests the authentication from the application server by using the authentication information.

The controller may control whether the installed application is to be maintained/uninstalled by using the lifecycle information of the application.

The image forming apparatus may be a non-GUI image forming apparatus.

### BRIEF DESCRIPTION OF THE DRAWINGS

The above and/or other aspects will be more apparent by describing certain exemplary embodiments with reference to the accompanying drawings, in which:
FIG. 1 illustrates an image forming system according to an exemplary embodiment of the present invention;
FIG. 2 illustrates a non-graphical user interface (GUI) image forming apparatus according to an exemplary embodiment of the present invention;
FIG. 3 illustrates a metadata generating process performed in a user terminal apparatus according to an exemplary embodiment of the present invention;
FIG. 4 illustrates an application executing process performed in an image forming apparatus according to an exemplary embodiment of the present invention;
FIG. 5 illustrates a process of fetching and managing a third party application from an application server according to an exemplary embodiment of the present invention;
FIG. 6 illustrates an exemplary method of executing a metadata job in an image forming apparatus according to an exemplary embodiment of the present invention; and
FIG. 7 illustrates an exemplary method of executing a job in an image forming apparatus according to an exemplary embodiment of the present invention.

### DETAILED DESCRIPTION

Exemplary embodiments are described in greater detail with reference to the accompanying drawings.

In the following description, the same drawing reference numerals are used for similar elements in different drawings. The matters defined in the description, such as detailed construction and elements, are provided to assist in a comprehensive understanding of the exemplary embodiments. Thus, it is apparent that the exemplary embodiments can be carried out without those specifically defined matters.

According to an exemplary embodiment of the present invention, a method of executing a metadata job in a non-graphical user interface (GUI) image forming apparatus through a user terminal apparatus is provided.

According to an exemplary embodiment of the present invention, a method of executing complicated jobs in a non-GUI image forming apparatus through a user terminal apparatus is disclosed. The non-GUI image forming apparatus controls a user terminal apparatus and an application server to interact with each other. A user interacts with an non-GUI image forming apparatus and uses the user terminal apparatus to perform a job necessary in the non-GUI image forming apparatus. The user forms an application, application-related setting, and other information in a remote application server. The user terminal apparatus transm its job metadata related to a job to be executed to the non-GUI image forming apparatus. If the non-GUI image forming apparatus receives the job metadata, the image forming apparatus parses the received job metadata and fetches a necessary application and related information from the application server. The application may be installed and executed in the image forming apparatus. Therefore, this method eases executions of complicated jobs and installations of applications even in a conventional image forming apparatus.

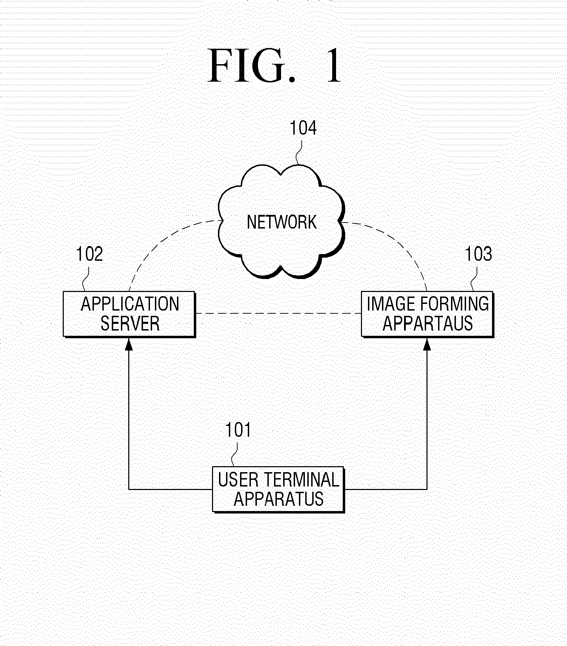

FIG. 1 illustrates an image forming system according to an exemplary embodiment of the present invention. As illustrated in FIG. 1, the image forming system includes a user terminal apparatus 101, an application server 102, a image forming apparatus 103 that includes equipment for executing commands transmitted from the user terminal apparatus 101, and a network 104 that connects the user terminal apparatus 101, the application server 102, and the image forming apparatus 103.

The user terminal apparatus 101 transmits the commands to the image forming apparatus 103 to execute jobs in the image forming apparatus 103. The user terminal apparatus 101 issues the commands to the application server 102 and performs configurations. In other words, the user terminal apparatus 101 forms various types of applications, information related to the applications, files to be downloaded, and other details in the application server 102. According to an exemplary embodiment, the user terminal apparatus 101 may be a mobile phone, a smart phone, a desktop computer, a laptop computer, or the like.

The application server 102 may be separate from the user terminal apparatus 101 and the image forming apparatus 103. The application server 102 stores files related to the applications, other various types of information, a method of installing the applications, and details of a method of using them. The application server 102 includes details of pre-requisites required for the user terminal apparatus 101 or the image forming apparatus 103. The application server 102 authenticates user credentials or other types of information when providing accesses to a few of applications. The authentication may be application specific, may be a single time usable application, or may be an application based on usage. The application server 102 may store files in different formats such as an Extensible Mark-up Language (XML), a Hypertext Mark-up Language (HTML), a word file, a webpage, etc.

The image forming apparatus 103 may be a non-GUI image forming apparatus that performs jobs provided from the user terminal apparatus 101. The image forming apparatus 103 interacts with the application server 102 to execute complicated jobs provided from the user terminal apparatus 101. The image forming apparatus 103 interacts with the application server 102 through the network 104 formed by the image forming system.

According to an exemplary embodiment of the present invention, a user may perform inputs in the image forming apparatus 103 to execute the commands transmitted to the image forming apparatus 103. However, this may depend on a job and an application to be executed. For example, there may be an application to upload a document to a cloud server and print the document. In this case, a final user may input details, for example, such as "Reduce size to 50%," "Collate the o/p," and "Water Mark with a custom tag."

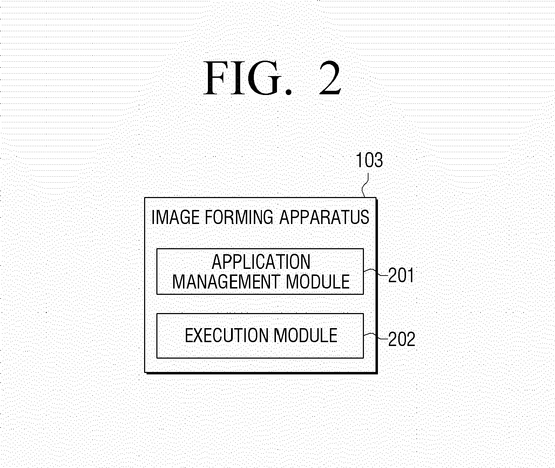

FIG. 2 illustrates an exemplary image forming apparatus invention. The image forming apparatus 103 interacts with the user terminal apparatus 101 and may perform complicated jobs. The image forming apparatus 103 includes an application management module 210 that assists a function of the image forming apparatus 103 and an execution module 202.

The application management module 201 receives applications and data or files related to the applications. The application management module 201 interacts with the user terminal apparatus 101 and the application server 102 to fetch necessary data. If a job is obtained from the user terminal apparatus 101, the application management module 201 selects an authentication request and user-related credentials and transmits the authentication request and the user-related credentials to the application server 102. The authentication processing may vary depending on the applications. According to an exemplary embodiment, the application management module 201 may obtain a Uniform Resource Locator (URL) of an application from the user terminal apparatus 101 and fetch the application from the application server 102 by using the URL. The application management module 201 may manage and store applications.

The execution module 202 executes tasks and jobs related to the applications in the image forming apparatus 103. The execution module 202 takes charge of processing metadata, processing of third party applications, and lifecycle-processing of applications.

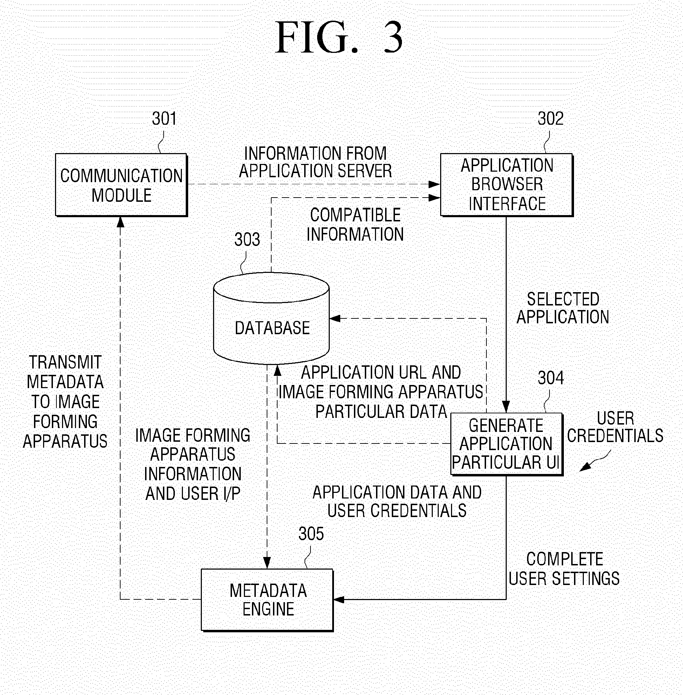

FIG. 3 illustrates a metadata generating process performed in a user terminal apparatus according to an exemplary embodiment of the present invention. The metadata includes third party applications that support generating of a configuration UI in the user terminal apparatus 101. Before the generating of the metadata starts by using a system where a job is suggested, a user may generate job metadata of the system. An operation of generation of the metadata includes browsing compatible applications by using an application browser interface 302, and selecting an application. The user browses applications from the user terminal apparatus 101 that may be a personal computer (PC) or a mobile phone in which a metadata generating system may be installed. The metadata generating system finds a compatible third-party module from the application server 102 and provides the compatible third party module to the user with assistance of a GUI generated through an application particular UI generation 303.

When browsing the application, the metadata generating system may consider various types of image forming apparatuses. The image forming apparatuses 103 may not support particular applications and thus may not be seen to the user. When selecting the application, the metadata generating system obtains information about supported apparatuses and allows the user to transmit a job only to the image forming apparatus 103 supported thereby. The user may browse applications and select an application. When an application is selected, the metadata generating system uses data provided by the application in order to provide the user with an interface inputting run-time parameters of a particular job. The run-time parameters may include at least one of an image forming option related to an image forming job and information (identification information) about an image forming apparatus to execute the image forming job. For example, the user may receive a request for inputs of the number of copies of a related print job, duplex settings, etc. As another example, the user may receive a request for an input of a folder in which scanned data is to be stored. Cues for these parameters are to be pre-provided to an application and is to be provided to the metadata generating system by the application server 102 when selecting an application. This may be achieved with assistance of an XML file of all applications which are provided to the application server 102 and in which an attribute, a type, and other constraints are stored. However, the is only an exemplary embodiment and is not limited to the XML file. Therefore, the cues may be formed in an arbitrary formation which is mutually understood by the application server 102 and the metadata generating system.

The metadata generating system receives information corresponding to necessary parameters, and a UI generating module 304 processes the necessary parameters. The UI generating module 304 uses predefined widgets of data types specified in an application, and generates and provides an interface through which the user inputs necessary parameters. If the user inputs the necessary parameters, the interface inputs an authentication credential which is to be provided by an image forming apparatus. However, this is an option and depends on whether an application requires information for remotely accessing the application.

According to an exemplary embodiment, metadata transmitted from a user terminal apparatus to an image forming apparatus may include authentication information necessary for fetching an application from an application server. The metadata may be used to fetch an application requiring the same authentication information from the application server.

Information obtained through the method may be stored in a temporary storage position such as an in-memory database 303. The obtained information may include information about an application including at least one of URL information in which an application may be positioned in the application server and lifecycle information of the application. If this operation is performed, a metadata generating engine 305 may be invoked. The metadata generating module 305 extracts information collated from the user and various types, e.g., all types of information about an image forming apparatus model to generate metadata. The metadata generating module 305 may encrypt the metadata generated to guarantee that credentials input by the user are not accessed by unauthenticated systems/individuals. The metadata generating module 305 transmits the metadata to the image forming apparatus through appropriate communication channels by using a communication module 301.

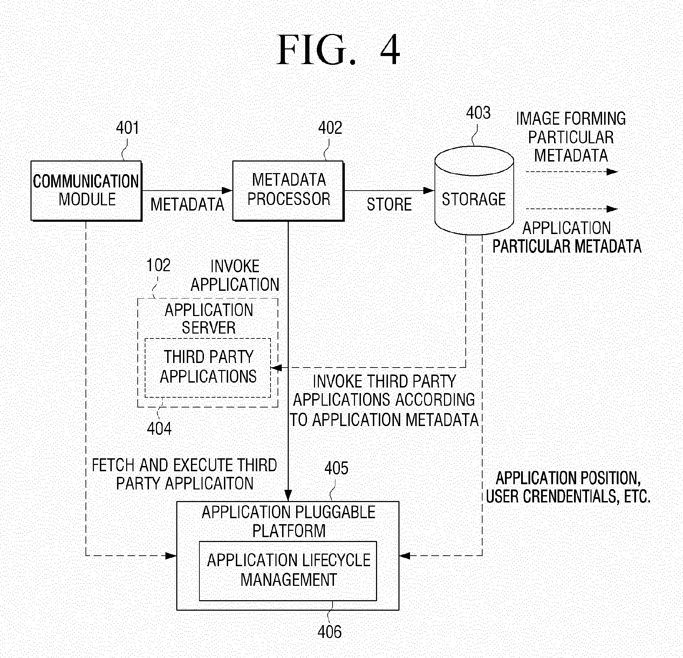

FIG. 4 illustrates an application executing process performed in an image forming apparatus according to an exemplary embodiment of the present invention. If metadata is generated, the metadata is transmitted from the user terminal apparatus 101 to the image forming apparatus 103 to execute a job in the image forming apparatus 103. The image forming apparatus 103 processes the metadata and executes command provided to the metadata. According to an exemplary embodiment, besides the metadata, a method of obtaining an application, a type of a file to be used to execute a task, and information related to lifecycle of the application may be provided to the image forming apparatus 103. Authentication details for authenticating and fetching an application used in the application server 102. A communication module 401, e.g., communicator of the image forming apparatus 103 receives a file. If the file is encrypted, the file is deciphered and stored in a temporal storage space 403. The file may include parameters and commands for applications and commands which are to be processed by the image forming apparatus 103.

A metadata processor 402 may be invoked to process commands specified in the image forming apparatus 103 and invoke an application lifecycle management system 405. The metadata processor 402 deciphers commands for the image forming apparatus 103. Here, some of the commands may include information about initial setting, etc. For example, commands for the image forming apparatus 103 requiring a local session to be invoked may include information necessary for invoking the local session. Another example of data to be provided by the commands is particular default settings. As another example, the data may be a set of commands to be executed before third party applications 404 are fetched. An application for printing collages from a set of given images will now be exemplarily described. The image forming apparatus may receive a command to fetch images from given URLs and prepare images for a collage printing application. The image forming apparatus may scan a few of images maintained in an automatic document feeder (ADF).

If the image forming apparatus 103 satisfactorily executes intended commands, the metadata processor 402 hands a control over to a pluggable application platform 405. The metadata processor 402 may check positions of metadata files. Therefore, the metadata processor 402 may invoke an application lifecycle management module 406. The metadata processor 402 deciphers an URL in which an application is fetched. Information about user credentials to be provided to obtain an application from a particular URL may be deciphered. The application lifecycle management module 406 extracts metadata limited to an application and places the metadata in accessible positions of third party applications 404 existing in the application server 102.

The third party applications 404 are fetched and loaded from the application server 102, and are reported on a position of metadata used for an application received from a user. The application knows about a method of deciphering and using information provided as a part of the metadata. The application deciphers necessary information and executes a job with assistance of the necessary information.

Therefore, if a third party application is installed, the image forming apparatus 103 perform image forming jobs such as scanning, faxing, copying, printing, etc. by using the installed application and parameters related to the image forming jobs.

If the application is completely executed, the application lifecycle management module 406 performs an appropriate operation. An application manager may determine to maintain the application in a system or may determine to remove the application from the system based on settings/information provided by the user.

The third party applications 404 may record a method of supporting the system. The third party applications may be browsed and downloaded through the suggested system. The application provides information about data that may be used in a metadata generation operation and may be required by the application.

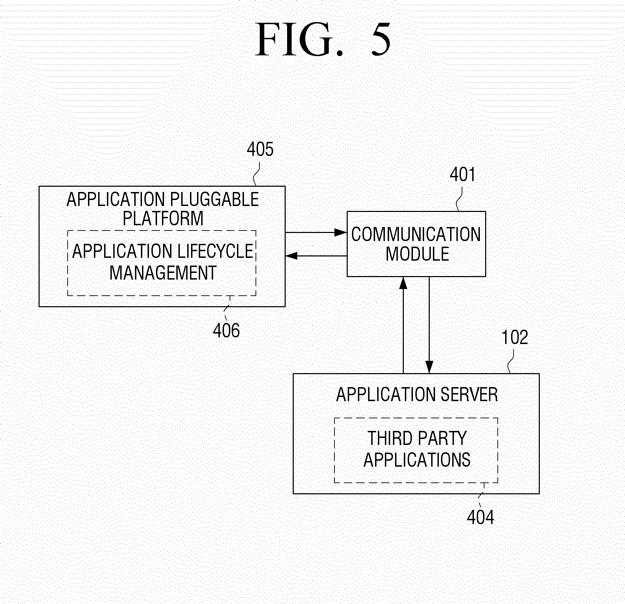

FIG. 5 illustrates a process of fetching a third party application from an application server and managing the third party application according to an exemplary embodiment of the present invention. Referring to FIG. 5, the application lifecycle management module 406 and the application server 102 communicate with each other. According to an exemplary embodiment, the user terminal apparatus 101 may transmit authentication information necessary for fetching an application from the application server 102 to the image forming apparatus 103.

The application lifecycle management module 406 transmits a request for an application e.g., a necessary application to the application server 102 through the communication module 401. The communication module 401 may be connected to the application server 102. Authentication details may be verified in the application server 102, and an application may be transmitted to the application lifecycle management module 406 through the communication module 401. The application lifecycle management module 406 installs an application and allows the user to use the application to complete a job. The application lifecycle management module 406 may uninstall the application depending on application settings at a particular time.

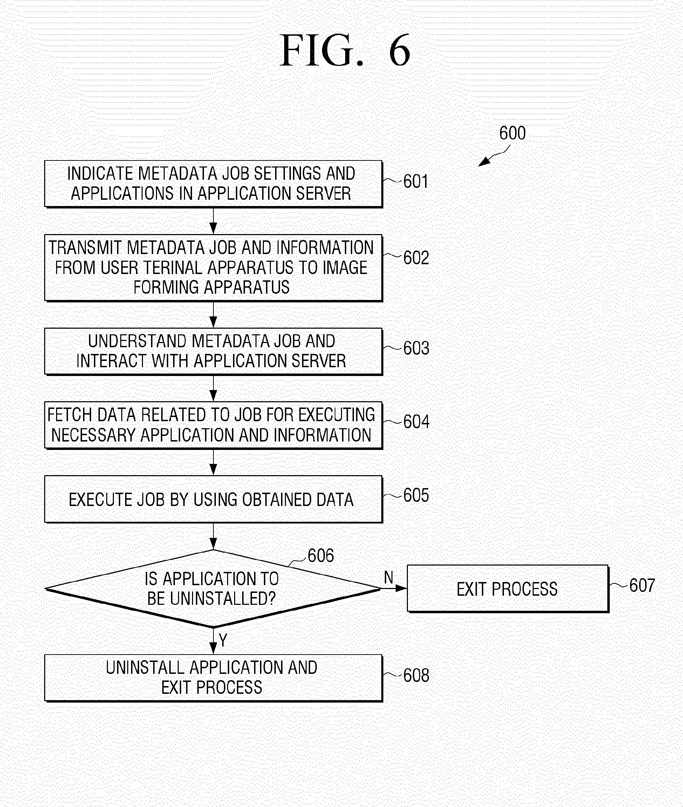

FIG. 6 illustrates a method 600 of executing a metadata job in an image forming apparatus according to an exemplary embodiment of the present invention. A user indicates applications related to a job in the application server 102 from an allocation of the job to the image forming apparatus. In operation 601, the user uses a user terminal apparatus to perform a configuration in the application server 102. According to an exemplary embodiment, the user terminal apparatus may be laptop computer. The user uses the laptop computer to input, for example, metadata details and other types of information (user credentials necessary for an authentication, a lifecycle of an application, etc.) related to an application. In operation 602, the job and metadata may be transmitted to the image forming apparatus 103 through the laptop computer. If the image forming apparatus 103 receives a command from the laptop computer, the image forming apparatus 103 checks the job in operation 603. The image forming apparatus 103 interacts the application server 102 to fetch other types of information related to executions of necessary application and job. According to an exemplary embodiment, the image forming apparatus 103 may receive an URL of an application position stored in the application server 102. If authentication details are required, the authentication details are provided to fetch necessary data and information from the application server 102 in operation 604. According to an exemplary embodiment, an application may fetch data necessary for executing a job from various types of sources such as the Internet, a local DMS, etc. or the data may be generated by an MFP (scanner) or the like. In operation 605, the job is executed by using the obtained data. After the job is completed, whether the application is to be uninstalled may be checked through an application lifecycle management in operation 606. If the application does not need to be uninstalled, the image forming apparatus 103 may exit the process in operation 607 and wait for next commands. If the application needs to be uninstalled, the application is uninstalled in operation 608, and the image forming apparatus 103 exits the process. Various operations of the method 600 may be performed in the illustrated order, in a different order, or simultaneously. According to exemplary embodiments, some operations in FIG. 6 may be omitted.

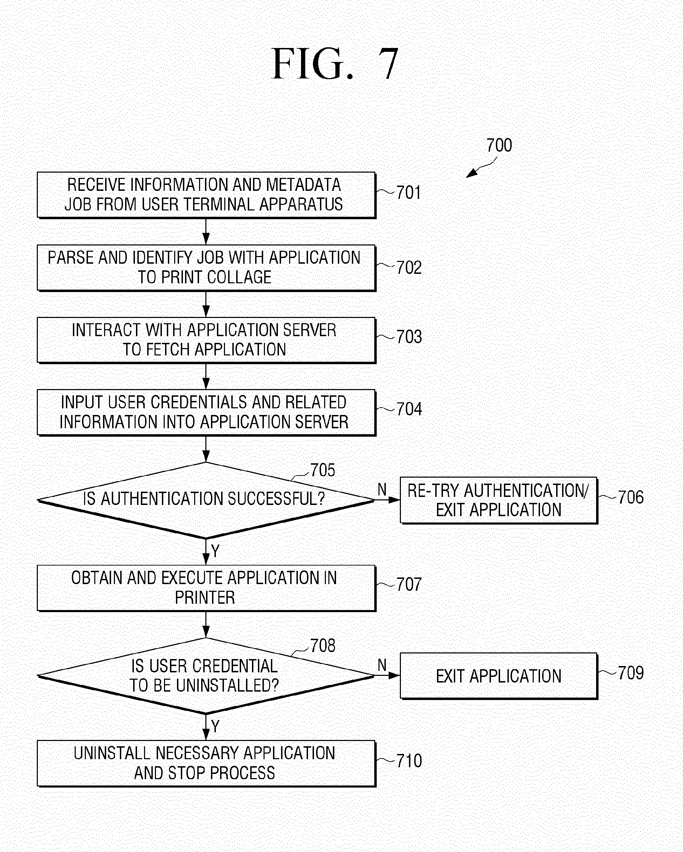

FIG. 7 illustrates a method 700 of executing a job in an image forming apparatus according to an exemplary embodiment of the present invention. An exemplary job of obtaining an application from the application server 102 and obtaining data, e.g., a picture from an account, e.g., a Picasa account of a user to print a collage is disclosed. In operation 701, the image forming apparatus 103 receives job metadata from a user terminal apparatus, e.g., a mobile phone of the user. The job metadata may include information related to details such as a place for fetching an application and a method of using files. If the job metadata is obtained, the image forming apparatus 103 parses information and determines whether a job is a collage print in operation 702. The image forming apparatus 103 interacts with the application server 102 to fetch an application, e.g., a Picasa application and download the application, e.g., the Picasa application to the image forming apparatus 103. When the image forming apparatus 103 interacts with the application server 102, the image forming apparatus 103 is requested to provide authentication details, such as user credentials including an account user name, e.g., a Picasa account user name and password in operation 704. If an authentication is successful in operation 705, an application is obtained from the image forming apparatus 103 and successfully executed in operation 707. In other words, necessary collages of selected pictures may be formed and printed. If authentication is not successful, the image forming apparatus 103 exits the application or re-tries the authentication in operation 706. In operation 708, an application lifecycle is checked to determine whether the application is to be uninstalled. If it is determined that the application is to be uninstalled, the application is uninstalled in operation S71 0, and the process stops. If it is determined that the application is not to be uninstalled, the image forming apparatus 103 exits the application after the application is completely executed. Several operations of the method 700 may be performed in the illustrated order, in a different order, or simultaneously. According to exemplary embodiments, some operations illustrated in FIG. 7 may be omitted.

According to an exemplary embodiment, information may remain in a user terminal apparatus and may perform all processing operations. The user terminal apparatus may use an application of an application server to allow an application server to use facilities such as cloud computing, etc. An image may be processed and then printed by other computing devices including a user terminal apparatuses used for generating jobs. if a final user starts a job from the user terminal apparatus, a part of processing may be performed.

Exemplary embodiments of the present application may be executed in at least one hardware device and may be executed through at least one software program that executes network management functions to control elements. Elements illustrated, for example, in FIGS. 1 and 2 include blocks that may be at least one of a hardware device and/or a combination of a hardware device and a software module.

The foregoing exemplary embodiments and advantages are exemplary and are not to be construed as limiting. The present disclosure can be applied to other types of apparatuses. A description of the exemplary embodiments is illustrative, and does not limit the scope of the claims.

## Claims

1. A method of controlling an image forming apparatus connected to a user terminal apparatus, the method comprising:
receiving job metadata comprising a parameter related to an image forming job and information about an application selected in the user terminal apparatus from the user terminal apparatus;
fetching the application selected in the user terminal apparatus from an application server by using the information of the job metadata about the application;
installing the fetched application; and
performing the image forming job by using the installed application and the parameter related to the image forming job.

2. The method of claim 1, wherein the information about the application comprises at least one of Uniform Resource Locator (URL) information in which an application is positioned in the application server and lifecycle information of the application.

3. The method of claim 1 or 2, wherein the job metadata further comprises authentication information for an authentication of the image forming apparatus with respect to the application server,
wherein the method further comprises: before fetching the application, requesting the authentication from the application server by using the authentication information.

4. The method of any one of claims 1 through 3, further comprising:
controlling whether the installed application is to be maintained or uninstalled, by using the lifecycle information of the application.

5. The method of any one of claims 1 through 4, wherein the image forming apparatus is a non-graphical user interface (GUI) image forming apparatus.

6. A user terminal apparatus which controls an operation of an image forming apparatus, the user terminal apparatus comprising:
an input part which selects an application positioned in an application server,
a display which displays an interface for receiving a parameter related to an image forming job provided by the selected application;
a controller which generates job metadata about the image forming apparatus, wherein the job metadata comprises the parameter received by the interface and information about the selected application; and
a communicator which transmits the generated job metadata to the image forming apparatus.

7. The user terminal apparatus of claim 6, wherein:
the display browses and displays at least one of a plurality of applications compatible with the image forming apparatus connected to the user terminal apparatus, wherein the plurality of applications are positioned in the application server; and
the input part which selects one of the browsed at least one applications.

8. The user terminal apparatus of claim 6 or 7, wherein the parameter comprises at least one of an image forming option related to the image forming job and information about an image forming apparatus which is to perform the image forming job.

9. The user terminal apparatus of any one of claims 6 through 8, wherein the information about the application comprises at least one of URL information in which an application is located in the application server and lifecycle information of the application.

10. The user terminal apparatus of any one of claims 6 through 9, wherein:
the display displays an interface for receiving authentication information for an authentication of the image forming apparatus with respect to the application server; and
the controller generates job metadata further comprising the authentication information.

11. An image forming apparatus connected to a user terminal apparatus, the image forming apparatus comprising:
a communicator which receives job metadata comprising a parameter related to an image forming job and information about an application selected in the user terminal apparatus from the user terminal apparatus;
a controller which fetches the application selected in the user terminal apparatus from an application server by using the information of the job metadata about the application and installs the fetched application; and
an image former which performs the image forming job by using the installed application and the parameter related to the image forming job.

12. The image forming apparatus of claim 11, wherein the information about the application comprises at least one of URL information in which an application is located in the application server and lifecycle information of the application.

13. The image forming apparatus of claim 11 or 12, wherein the job metadata further comprises authentication information for an authentication of the image forming apparatus with respect to the application server,
wherein before fetching the application, the controller requests the authentication from the application server by using the authentication information.

14. The image forming apparatus of any one of claims 11 through 13, wherein the controller controls whether the installed application is to be maintained/uninstalled by using the lifecycle information of the application.

15. The image forming apparatus of any one of claims 11 through 14, wherein the image forming apparatus is a non-GUI image forming apparatus.
